(19) Europäisches Patentamt
European Patent Office
Office européen des brevets

(11) EP 3 153 527 A1

(12) EUROPEAN PATENT APPLICATION
published in accordance with Art. 153(4) EPC

(43) Date of publication:
**12.04.2017 Bulletin 2017/15**

(21) Application number: **15803136.9**

(22) Date of filing: **04.06.2015**

(51) Int Cl.:
***C08F 2/24*** (2006.01) ***C08F 14/00*** (2006.01)

(86) International application number:
**PCT/JP2015/066211**

(87) International publication number:
**WO 2015/186794 (10.12.2015 Gazette 2015/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **04.06.2014 JP 2014116292**

(71) Applicant: **Daikin Industries, Ltd.**
**Osaka-shi, Osaka 530-8323 (JP)**

(72) Inventors:
- **NANBA Yoshinori**
  **Osaka 530-8323 (JP)**
- **FUKAMI Dai**
  **Osaka 530-8323 (JP)**
- **YAMABE Takuya**
  **Osaka 530-8323 (JP)**
- **KATO Taketo**
  **Osaka 530-8323 (JP)**
- **ONO Makoto**
  **Osaka 530-8323 (JP)**
- **TAIRA Takahiro**
  **Osaka 530-8323 (JP)**
- **YOSHIDA Hirotoshi**
  **Osaka 530-8323 (JP)**
- **YAMANAKA Taku**
  **Osaka 530-8323 (JP)**

(74) Representative: **Hoffmann Eitle**
**Patent- und Rechtsanwälte PartmbB**
**Arabellastraße 30**
**81925 München (DE)**

# (54) METHOD FOR PRODUCING FLUOROPOLYMER AQUEOUS DISPERSION LIQUID

(57) The present invention provides a method for producing a fluoropolymer aqueous dispersion having a significantly small particle size and excellent dispersion stability. The present invention relates to a method for producing an aqueous dispersion containing at least one fluoropolymer selected from the group consisting of polytetrafluoroethylene and melt-fabricable fluororesins excluding polytetrafluoroethylene. The method includes polymerizing a fluoromonomer in an aqueous medium in the presence of a fluorosurfactant and a polymerization initiator. The fluorosurfactant has a concentration in the aqueous medium of not lower than 0.8 times the critical micelle concentration of the fluorosurfactant.

EP 3 153 527 A1

## Description

TECHNICAL FIELD

The present invention relates to methods for producing fluoropolymer aqueous dispersions.

BACKGROUND ART

Fluororesin aqueous dispersions are usually produced by emulsion polymerizing a fluoromonomer in the presence of a fluorosurfactant.

Patent Literature 1 proposes a polytetrafluoroethylene aqueous emulsion obtained by emulsion polymerizing tetrafluoroethylene alone or with a monomer copolymerizable therewith in an aqueous medium using a fluorine-containing emulsifier represented by the formula:

$$XCF_2CF_2(O)_mCF_2CF_2OCF_2COOA$$

(wherein X is a hydrogen atom or a fluorine atom; A is a hydrogen atom, an alkali metal, or $NH_4$; and m is an integer of 0 or 1) in an amount of 1,500 to 20,000 ppm relative to the final polytetrafluoroethylene yield.

Patent Literature 2 discloses a low molecular weight polytetrafluoroethylene aqueous dispersion produced by a method for producing a low molecular weight polytetrafluoroethylene. The method includes emulsion polymerizing tetrafluoroethylene alone or tetrafluoroethylene and a modifying monomer copolymerizable with the tetrafluoroethylene in an aqueous medium in the presence of a reactive compound and a chain-transfer agent, wherein the reactive compound has a hydrophilic group and a functional group reactive in radical polymerization, and is used in an amount corresponding to more than 10 ppm relative to the aqueous medium.

Patent Literature 3 discloses an aqueous dispersion of fluoropolymer particles produced by a method for producing an aqueous dispersion of fluoropolymer particles. The method includes the steps of: preparing dispersed particles of a fluorinated ionomer in an aqueous polymerization medium; and polymerizing at least one fluorinated monomer in the presence of the dispersed particles of the fluorinated ionomer and an initiator in the aqueous polymerization medium to form an aqueous dispersion of fluoropolymer particles.

CITATION LIST

- Patent Literature

Patent Literature 1: WO 2007/046345
Patent Literature 2: JP 2010-180364 A
Patent Literature 3: JP 2012-513530 T

SUMMARY OF INVENTION

- Technical Problem

The conventional techniques have difficulty in producing an aqueous dispersion containing fluoropolymer particles having a sufficiently small particle size and excellent dispersion stability.

The present invention is devised in the aforementioned situation, and aims to provide a method for producing a fluoropolymer aqueous dispersion having a significantly small particle size and excellent dispersion stability.

- Solution to Problem

The inventors found that a fluorosurfactant whose concentration in polymerization is not lower than 0.8 times the critical micelle concentration of the fluorosurfactant itself can provide fluoropolymer particles having a significantly smaller particle size than particles obtained by any conventional polymerization method, completing the present invention.

Specifically, the present invention relates to a method for producing an aqueous dispersion containing at least one fluoropolymer selected from the group consisting of polytetrafluoroethylene and melt-fabricable fluororesins excluding polytetrafluoroethylene, the method including polymerizing a fluoromonomer in an aqueous medium in the presence of a fluorosurfactant and a polymerization initiator, the fluorosurfactant having a concentration in the aqueous medium

of not lower than 0.8 times the critical micelle concentration of the fluorosurfactant.

The fluorosurfactant preferably has Log POW of 3.4 or lower.

The fluorosurfactant is preferably at least one selected from the group consisting of:

fluorine-containing compounds represented by the following formula (1):

$$X\text{-}(CF_2)_{m1}\text{-}Y \qquad (1)$$

wherein X is H or F; m1 is an integer of 3 to 5; and Y is - $SO_3M$, $-SO_4M$, $-SO_3R$, $-SO_4R$, -COOM, $-PO_3M_2$, or $-PO_4M_2$, where M is H, $NH_4$, or an alkali metal, and R is a C1-C12 alkyl group; and fluorine-containing compounds represented by the following formula (3):

$$CF_3OCF(CF_3)CF_2OCF(CF_3)COOX \qquad (3)$$

wherein X is a hydrogen atom, $NH_4$, or an alkali metal atom.

The polymerization is preferably performed in the absence of a fluorine-containing compound represented by the following formula (2):

$$X\text{-}(CF_2)_{m2}\text{-}Y \qquad (2)$$

wherein X is H or F; m2 is an integer of 6 or greater; and Y is $-SO_3M$, $-SO_4M$, $-SO_3R$, $-SO_4R$, -COOM, $-PO_3M_2$, or $-PO_4M_2$, where M is H, $NH_4$, or an alkali metal, and R is a C1-C12 alkyl group.

The fluoropolymer preferably has a volume average particle size of not smaller than 0.1 nm but smaller than 20 nm.

The polymerization initiator is preferably at least one selected from the group consisting of persulfates and organic peroxides.

The polymerization initiator is preferably used in an amount corresponding to 1 to 5,000 ppm of the aqueous medium.

- Advantageous Effects of Invention

The method for producing a fluoropolymer aqueous dispersion of the present invention can provide an aqueous dispersion which contains fluoropolymer particles having a significantly small particle size and which is excellent in dispersion stability.

DESCRIPTION OF EMBODIMENTS

Before the specific description of the present invention, the terms used herein are defined or described below.

The term "fluororesin" herein means a partially crystalline fluoropolymer, and is not fluororubber but fluoroplastic. The fluororesin has a melting point and thermoplasticity, and may be either melt-fabricable or non-melt-fabricable.

The term "melt-fabricable" herein means that a polymer can be molten and then fabricated using a conventional processing device such as an extruder or an injection molding device. Thus, a melt-fabricable fluororesin usually has a melt flow rate of 0.01 to 500 g/10 min, which is measured by the method to be mentioned later.

The term "perfluororesin" herein means a resin formed from a perfluoropolymer in which all the monovalent atoms bonded to the carbon atoms constituting the main chain of the polymer are fluorine atoms. Not only monovalent atoms (fluorine atoms) but also groups such as alkyl groups, fluoroalkyl groups, alkoxy groups, and fluoroalkoxy groups may be bonded to the carbon atoms constituting the main chain of the polymer. Some of the fluorine atoms bonded to the carbon atoms constituting the main chain of the polymer may be replaced by chlorine atoms. Polymer end groups, in other words, groups terminating the polymer chain, may contain an atom other than fluorine. Most polymer end groups are derived from a polymerization initiator or a chain-transfer agent used for the polymerization reaction.

The term "fluororubber" herein means an amorphous fluoropolymer. The term "amorphous" herein means that the fluoropolymer has a melting peak ($\Delta H$) of 4.5 J/g or lower determined by differential scanning calorimetry (DSC) (temperature-increasing rate: 10°C/min) or differential thermal analysis (DTA) (temperature-increasing rate: 10°C/min). When crosslinked, the fluororubber shows elastomeric characteristics. The term "elastomeric characteristics" herein means that the polymer can be stretched and, when released from the force for stretching the polymer, the polymer can return to the original length and maintain this original length.

The term "perfluoromonomer" herein means a monomer having no carbon-hydrogen bond in a molecule. The

perfluoromonomer may be a monomer which contains the carbon atoms and the fluorine atoms and in which some of the fluorine atoms bonded to the carbon atoms may be replaced by chlorine atoms. The monomer may also contain not only the carbon atoms but also a nitrogen atom, an oxygen atom, and a sulfur atom. The perfluoromonomer is preferably a monomer in which all the hydrogen atoms are replaced by fluorine atoms. The perfluoromonomer does not include a monomer that gives a crosslinking site.

The term "monomer that gives a crosslinking site" herein means a monomer (cure-site monomer) having a crosslinkable group that can give a fluoropolymer a crosslinking site for forming a crosslink by a curing agent.

The term "polytetrafluoroethylene (PTFE)" herein preferably means a fluoropolymer including 99 mol% or more of tetrafluoroethylene relative to all the polymerized units.

The term "fluororesin (excluding polytetrafluoroethylene)" herein preferably means a fluoropolymer including less than 99 mol% of tetrafluoroethylene relative to all the polymerized units.

The "amount of each monomer constituting a fluoropolymer" herein can be calculated by appropriate combination of NMR, FT-IR, elemental analysis, and X-ray fluorescence analysis in accordance with the type of the monomer.

The present invention is described in detail below.

In the method for producing a fluoropolymer aqueous dispersion of the present invention, a fluoromonomer is polymerized in an aqueous medium in the presence of a fluorosurfactant and a polymerization initiator to provide an aqueous dispersion containing at least one fluoropolymer selected from the group consisting of polytetrafluoroethylene (PTFE) and melt-fabricable fluororesins excluding polytetrafluoroethylene.

In order to produce a fluoropolymer aqueous dispersion having a solid content of the fluoropolymer particles of less than 8 mass%, the concentration of the fluorosurfactant in the aqueous medium achieved in the production method of the present invention is preferably not lower than 0.8 times but lower than 1.5 times the critical micelle concentration.

In order to produce a fluoropolymer aqueous dispersion having a solid content of the fluoropolymer particles of 8 mass% or more, the concentration of the fluorosurfactant in the aqueous medium achieved in the production method of the present invention is preferably higher than 1.1 times but lower than 3.0 times the critical micelle concentration.

The production method is characterized in that the concentration of the fluorosurfactant in the aqueous medium is not lower than 0.8 times the critical micelle concentration of the fluorosurfactant. The concentration of the fluorosurfactant is preferably higher than 0.8 times the critical micelle concentration. Considering the polymerization stability and the cost, the concentration of the fluorosurfactant is preferably not higher than 3 times the critical micelle concentration.

The critical micelle concentration may be determined by measuring the surface tension. The surface tension may be measured using a surface tensiometer CBVP-A3 (Kyowa Interface Science Co., Ltd.), for example.

The critical micelle concentration may be determined in accordance with "Environmental Science & Technology (2011)", 45(19), 8120-8128 and the literature cited therein.

In order to stably produce a fluoropolymer aqueous dispersion having a desired particle size, the amount of change in the particle size is preferably as small as possible relative to the amount of change around the amount of the fluorosurfactant in the aqueous medium required for obtaining the fluoropolymer aqueous dispersion having a desired particle size. The amount of change in the particle size is preferably smaller than 25.00 nm, more preferably smaller than 3.40 nm, still more preferably smaller than 1.30 nm, further more preferably smaller than 0.20 nm, particularly preferably smaller than 0.04 nm, per 1000 ppm of the fluorosurfactant in the aqueous medium.

The critical micelle concentrations and Log POW of typical fluorosurfactants are as follows.

$CF_3(CF_2)_4COONH_4$: 56 g/L, 2.4
$CF_3(CF_2)_3COONH_4$: 82 g/L, 2.0
$CF_3OCF(CF_3)CF_2OCF(CF_3)COONH_4$: 22 g/L, 3.4
$C_3F_7OCF(CF_3)COONH_4$: 48 g/L, 2.5
$C_6F_{13}(CH_2)_2SO_3H$: 1 g/L, 5.9

The fluorosurfactant preferably has Log POW of 3.4 or lower. Log POW is a 1-octanol/water partition coefficient which is represented by Log P (wherein P is the ratio between the concentration of the fluorosurfactant in octanol and that in water in a phase-separated octanol/water (1:1) liquid mixture containing the fluorosurfactant). Log POW is preferably 1.5 or higher. For easy removal of the surfactant from the fluoropolymer, Log POW is more preferably 3.0 or lower, still more preferably 2.8 or lower.

Log POW is determined as follows. Specifically, HPLC is performed on standard substances (heptanoic acid, octanoic acid, nonanoic acid, and decanoic acid) each having a known octanol/water partition coefficient using TOSOH ODS-120T ($\phi$4.6 mm x 250 mm) as a column and acetonitrile/0.6 mass% $HClO_4$ aqueous solution (= 1/1 (vol/vol%)) as an eluent at a flow rate of 1.0 ml/min, a sample amount of 300 $\mu$L, and a column temperature of 40°C; with a detection light of UV 210 nm. For each standard substance, a calibration curve is drawn with respect to the elution time and the known octanol/water partition coefficient. Based on this calibration curve, Log POW is calculated from the elution time of the sample liquid in HPLC.

The fluorosurfactant having Log POW of 3.4 or lower is preferably an anionic fluorosurfactant, and examples

thereof include those described in US 2007/0015864, US 2007/0015865, US 2007/0015866, US 2007/0276103, US 2007/0117914, US 2007/142541, US 2008/0015319, US 3250808, US 3271341, JP 2003-119204 A, WO 2005/042593, WO 2008/060461, WO 2007/046377, WO 2007/119526, WO 2007/046482, and WO 2007/046345.

The fluorosurfactant is preferably an anion surfactant.

The anion surfactant is preferably a carboxylic acid surfactant or a sulfonic acid surfactant, for example. Examples of these surfactants include those containing a perfluorocarboxylic acid (I) represented by the following formula (I), a ω-H perfluorocarboxylic acid (II) represented by the following formula (II), a perfluoropolyether carboxylic acid (III) represented by the following formula (III), a perfluoroalkyl alkylene carboxylic acid (IV) represented by the following formula (IV), a perfluoroalkoxy fluorocarboxylic acid (V) represented by the following formula (V), a perfluoroalkyl sulfonic acid (VI) represented by the following formula (VI), and/or a perfluoroalkyl alkylene sulfonic acid (VII) represented by the following formula (VII).

The perfluorocarboxylic acid (I) is represented by the following formula (I):

$$F(CF_2)_{n1}COOM \qquad (I)$$

wherein n1 is an integer of 3 to 6; and M is H, $NH_4$, or an alkali metal element.

In the formula (I), the lower limit of n1 is preferably 4 in view of the stability of the polymerization reaction. In order to make the fluorosurfactant less likely to remain during processing of the resulting fluoropolymer aqueous dispersion, M is preferably $NH_4$.

For example, the perfluorocarboxylic acid (I) is preferably $F(CF_2)_6COOM$, $F(CF_2)_5COOM$, or $F(CF_2)_4COOM$, where M is defined as mentioned above.

The ω-H perfluorocarboxylic acid (II) is represented by the following formula (II):

$$H(CF_2)_{n2}COOM \qquad (II)$$

wherein n2 is an integer of 4 to 8; and M is defined as mentioned above.

In the formula (II), the upper limit of n2 is preferably 6 in view of the stability in the polymerization reaction. In order to make the fluorosurfactant less likely to remain during processing of the resulting fluoropolymer aqueous dispersion, M is preferably $NH_4$.

For example, the ω-H perfluorocarboxylic acid (II) is preferably $H(CF_2)_8COOM$, $H(CF_2)_7COOM$, $H(CF_2)_6COOM$, $H(CF_2)_5COOM$, or $H(CF_2)_4COOM$, where M is defined as mentioned above.

The perfluoropolyether carboxylic acid (III) is represented by the following formula (III):

$$Rf^1\text{-}O\text{-}(CF(CF_3)CF_2O)_{n3}CF(CF_3)COOM \qquad (III)$$

wherein $Rf^1$ is a C1-C5 perfluoroalkyl group; n3 is an integer of 0 to 3; and M is defined as mentioned above.

In the formula (III), $Rf^1$ is preferably a perfluoroalkyl group having four or less carbon atoms in view of the stability in the polymerization, and n3 is preferably 0 or 1. In order to make the fluorosurfactant less likely to remain during processing of the resulting fluoropolymer aqueous dispersion, M is preferably $NH_4$.

The perfluoropolyether carboxylic acid (III) is preferably $C_4F_9OCF(CF_3)COOM$, $C_3F_7OCF(CF_3)COOM$, $C_2F_5OCF(CF_3)COOM$, $CF_3OCF(CF_3)COOM$, or $CF_3OCF(CF_3)CF_2OCF(CF_3)COOM$, where M is defined as mentioned above. For good stability in the polymerization and good removing efficiency, it is more preferably $CF_3OCF(CF_3)COOM$ or $CF_3OCF(CF_3)CF_2OCF(CF_3)COOM$, where M is defined as mentioned above.

The perfluoroalkyl alkylene carboxylic acid (IV) is represented by the following formula (IV):

$$Rf^2(CH_2)_{n4}Rf^3COOM \qquad (IV)$$

wherein $Rf^2$ is a C1-C5 perfluoroalkyl group; $Rf^3$ is a C1-C3 linear or branched perfluoroalkylene group; n4 is an integer of 1 to 3; and M is defined as mentioned above.

In the formula (IV), $Rf^2$ is preferably a perfluoroalkyl group having two or more carbon atoms or a perfluoroalkyl group having four or less carbon atoms. $Rf^3$ is preferably a C1 or C2 perfluoroalkylene group, more preferably $-(CF_2)-$ or $-CF(CF_3)-$. Further, n4 is preferably 1 or 2, more preferably 1. In order to make the fluorosurfactant less likely to remain during processing of the resulting fluoropolymer aqueous dispersion, M is preferably $NH_4$.

For example, the perfluoroalkyl alkylene carboxylic acid (IV) is preferably $C_4F_9CH_2CF_2COOM$, $C_3F_7CH_2CF_2COOM$, $C_2F_5CH_2CF_2COOM$, $C_4F_9CH_2CF(CF_3)COOM$, $C_3F_7CH_2CF(CF_3)COOM$, $C_2F_5CH_2CF(CF_3)COOM$, $C_4F_9CH_2CH_2CF_2COOM$, $C_3F_7CH_2CH_2CF_2COOM$, or $C_2F_5CH_2CH_2CF_2COOM$, where M is defined as mentioned above.

The perfluoroalkoxy fluorocarboxylic acid (V) is represented by the following formula (V):

$Rf^4$-O-$CY^1Y^2CF_2$-COOM (V)

wherein $Rf^4$ is a C1-C5 perfluoroalkyl group; $Y^1$ and $Y^2$ may be the same as or different from each other, and are each H or F; and M is defined as mentioned above.

In the formula (V), $Rf^4$ is preferably a C1-C3 perfluoroalkyl group, more preferably a C3 perfluoroalkyl group, in view of the polymerization stability. In order to make the fluorosurfactant less likely to remain during processing of the resulting fluoropolymer aqueous dispersion, M is preferably $NH_4$.

The perfluoroalkoxy fluorocarboxylic acid (V) is preferably $C_3F_7OCH_2CF_2COOM$, $C_3F_7OCHFCF_2COOM$, or $C_3F_7OCF_2CF_2COOM$, where M is defined as mentioned above.

The perfluoroalkyl sulfonic acid (VI) is represented by the following formula (VI):

$F(CF_2)_{n5}SO_3M$ (VI)

wherein n5 is an integer of 3 to 6; and M is defined as mentioned above.

In the formula (VI), n5 is preferably an integer of 4 or 5 in view of the polymerization stability. In order to make the fluorosurfactant less likely to remain during processing of the resulting fluoropolymer aqueous dispersion, M is preferably $NH_4$.

For example, the perfluoroalkyl sulfonic acid (VI) is preferably $F(CF_2)_4SO_3M$ or $F(CF_2)_5SO_3M$, where M is defined as mentioned above.

The perfluoroalkyl alkylene sulfonic acid (VII) is represented by the following formula (VII):

$Rf^5(CH_2)_{n6}SO_3M$ (VII)

wherein $Rf^5$ is a 1 to 6 perfluoroalkyl group; n6 is an integer of 1 to 3; and M is defined as mentioned above.

In the formula (VII), $Rf^5$ is preferably a C1-C3 perfluoroalkyl group, more preferably a C3 perfluoroalkyl group. Further, n6 is preferably 1 or 2, more preferably 1. In order to make the fluorosurfactant less likely to remain during processing of the resulting fluoropolymer aqueous dispersion, M is preferably $NH_4$.

For example, the perfluoroalkyl alkylene sulfonic acid (VII) is preferably $C_3F_7CH_2SO_3M$ or $C_6F_{13}(CH_2)_2SO_3M$, where M is defined as mentioned above. For good stability in the polymerization and good removing efficiency, it is more preferably $C_3F_7CH_2SO_3M$ where M is defined as mentioned above.

The fluorosurfactant is preferably at least one selected from the group consisting of: fluorine-containing compounds represented by the following formula (1):

X-$(CF_2)_{m1}$-Y (1)

(wherein X is H or F; m1 is an integer of 3 to 5; and Y is $-SO_3M$, $-SO_4M$, $-SO_3R$, $-SO_4R$, -COOM, $-PO_3M_2$, or $-PO_4M_2$, where M is H, $NH_4$, or an alkali metal and R is a C1-C12 alkyl group); the ω-H perfluorocarboxylic acids (II) represented by the formula (II); the perfluoropolyether carboxylic acids (III) represented by the formula (III); the perfluoroalkyl alkylene carboxylic acids (IV) represented by the formula (IV); the perfluoroalkoxy fluorocarboxylic acids (V) represented by the formula (V); and the perfluoroalkyl alkylene sulfonic acid (VII) represented by the formula (VII).

The fluorosurfactant is more preferably at least one selected from the group consisting of: the fluorine-containing compounds represented by the following formula (1) :

X-$(CF_2)_{m1}$-Y (1)

(wherein X is H or F; m1 is an integer of 3 to 5; and Y is $-SO_3M$, $-SO_4M$, $-SO_3R$, $-SO_4R$, -COOM, $-PO_3M_2$, or $-PO_4M_2$, where M is H, $NH_4$, or an alkali metal and R is a C1-C12 alkyl group); fluorine-containing compounds represented by the following formula (3):

$CF_3OCF(CF_3)CF_2OCF(CF_3)COOX$ (3)

(wherein X is a hydrogen atom, $NH_4$, or an alkali metal atom); fluorine-containing compounds represented by the following formula (4):

$CF_3CF_2OCF_2CF_2OCF_2COOX$ (4)

(wherein X is a hydrogen atom, $NH_4$, or an alkali metal atom); and fluorine-containing compounds represented by the

following formula (5):

$$CF_3OCF_2CF_2OCF_2COOX \quad (5)$$

(wherein X is a hydrogen atom, $NH_4$, or an alkali metal atom).

The fluorosurfactant is still more preferably at least one selected from the group consisting of: the fluorine-containing compounds represented by the following formula (1):

$$X\text{-}(CF_2)_{m1}\text{-}Y \quad (1)$$

(wherein X is H or F; m1 is an integer of 3 to 5; and Y is $-SO_3M$, $-SO_4M$, $-SO_3R$, $-SO_4R$, -COOM, $-PO_3M_2$, or $-PO_4M_2$, where M is H, $NH_4$, or an alkali metal and R is a C1-C12 alkyl group); and the fluorine-containing compounds represented by the following formula (3):

$$CF_3OCF(CF_3)CF_2OCF(CF_3)COOX \quad (3)$$

(wherein X is a hydrogen atom, $NH_4$, or an alkali metal atom).

The fluorosurfactant is more preferably a fluorine-containing compound represented by the following formula (1) :

$$X\text{-}(CF_2)_{m1}\text{-}Y \quad (1)$$

(wherein X is H or F; m1 is an integer of 3 to 5; Y is - $SO_3M$, $-SO_4M$, $-SO_3R$, $-SO_4R$, -COOM, $-PO_3M_2$, or $-PO_4M_2$, where M is H, $NH_4$, or an alkali metal and R is a C1-C12 alkyl group).

Examples of the fluoromonomer include fluoroolefins, preferably C2-C10 fluoroolefins; cyclic fluorinated monomers; fluorinated alkyl vinyl ethers represented by $CQ_2=CQOR^1$ or $CQ_2=CQOR^2OR^3$ (wherein Q is H or F; $R^1$ and $R^3$ are each a C1-C8 alkyl group in which part or all of the hydrogen atoms is/are replaced by fluorine atoms; and $R^2$ is a C1-C8 alkylene group in which part or all of the hydrogen atoms is/are replaced by fluorine atoms); fluorine-containing olefins having a nitrile group; and fluorine-containing vinyl ethers having a nitrile group.

More specifically, the fluoromonomer is preferably at least one selected from the group consisting of tetrafluoroethylene (TFE), hexafluoropropylene (HFP), chlorotrifluoroethylene (CTFE), vinyl fluoride, vinylidene fluoride (VDF), trifluoroethylene, hexafluoroisobutylene, monomers represented by $CH_2=CZ^1(CF_2)_nZ^2$ (wherein $Z^1$ is H or F; $Z^2$ is H, F, or Cl; and n is an integer of 1 to 10), perfluoro(alkyl vinyl ethers) (PAVE) represented by $CF_2=CF\text{-}ORf^6$ (wherein $Rf^6$ is a C1-C8 perfluoroalkyl group), alkyl perfluorovinyl ether derivatives represented by $CF_2=CF\text{-}O\text{-}CH_2\text{-}Rf^7$ (wherein $Rf^7$ is a C1-C5 perfluoroalkyl group), perfluoro-2,2-dimethyl-1,3-dioxole (PDD), and perfluoro-2-methylene-4-methyl-1,3-dioxolane (PMD).

Examples of the monomers represented by $CH_2=CZ^1(CF_2)_nZ^2$ include $CH_2=CFCF_3$, $CH_2=CH\text{-}C_4F_9$, $CH_2=CH\text{-}C_6F_{13}$, and $CH_2=CF\text{-}C_3F_6H$.

Examples of the perfluoro(alkyl vinyl ethers) represented by $CF_2=CF\text{-}ORf^6$ include $CF_2=CF\text{-}OCF_3$, $CF_2=CF\text{-}OCF_2CF_3$, and $CF_2=CF\text{-}OCF_2CF_2CF_3$.

The fluoromonomer may be polymerized together with a fluorine-free monomer. Examples of the fluorine-free monomer include hydrocarbon monomers reactive with the fluoromonomer. Examples of the hydrocarbon monomers include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, n-vinyl butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, vinyl monochloroacetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; and alkyl allyl esters such as ethyl allyl ester, propyl allyl ester, butyl allyl ester, isobutyl allyl ester, and cyclohexyl allyl ester.

The fluorine-free monomer may be a functional group-containing hydrocarbon monomer. Examples of the functional group-containing hydrocarbon monomer include hydroxyalkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; glycidyl group-containing fluorine-free monomers such as glycidyl vinyl ether and glycidyl allyl ether; amino group-containing fluorine-free monomers such as amino alkyl vinyl ethers and amino alkyl allyl ethers; amide group-containing fluorine-free monomers such as (meth)acrylamide and methylol acrylamide; bromine-containing olefins, iodine-containing olefins, bromine-containing vinyl ethers, and iodine-containing vinyl ethers; and nitrile group-containing fluorine-free monomers.

Polymerization of the above fluoromonomer provides an aqueous dispersion containing at least one fluoropolymer selected from the group consisting of PTFE and melt-fabricable fluororesins excluding PTFE.

The PTFE may be a homo-PTFE or a modified PTFE. The modified PTFE includes a TFE unit and a modifying monomer unit based on a modifying monomer copolymerizable with TFE. The PTFE may be a non-melt-fabricable, fibrillatable high molecular weight PTFE or a melt-fabricable, non-fibrillatable low molecular weight PTFE.

The modifying monomer may be any monomer copolymerizable with TFE. Examples thereof include perfluoroolefins such as hexafluoropropylene (HFP); chlorofluoroolefins such as chlorotrifluoroethylene (CTFE); hydrogen-containing fluoroolefins such as trifluoroethylene and vinylidene fluoride (VDF); perfluorovinyl ethers; perfluoroalkylethylenes; ethylene; and nitrile group-containing fluorine-containing vinyl ethers. These modifying monomers may be used alone or in combination.

Any perfluorovinyl ether may be used, and examples thereof include unsaturated perfluoro compounds represented by the following formula (6):

$CF_2=CF-ORf^8$ (6)

wherein $Rf^8$ is a perfluoro organic group. The term "perfluoro organic group" herein means an organic group in which all the hydrogen atoms bonded to the carbon atoms are replaced by fluorine atoms. The perfluoro organic group may have ether oxygen.

Examples of the perfluorovinyl ether include perfluoro(alkyl vinyl ethers) (PAVE) represented by the formula (6) wherein $Rf^8$ is a C1-C10 perfluoroalkyl group. The perfluoroalkyl group preferably has 1 to 5 carbon atoms.

The perfluoroalkyl group in the PAVE may be a perfluoromethyl group, a perfluoroethyl group, a perfluoropropyl group, a perfluorobutyl group, a perfluoropentyl group, or a perfluorohexyl group, for example. Preferred is perfluoromethyl vinyl ether (PMVE) in which the perfluoroalkyl group is a perfluoromethyl group or perfluoropropyl vinyl ether (PPVE) in which the perfluoroalkyl group is a perfluoropropyl group.

Examples of the perfluorovinyl ether further include those represented by the formula (6) wherein $Rf^8$ is a C4-C9 perfluoro(alkoxyalkyl) group; those represented by the formula (6) wherein $Rf^8$ is a group represented by the following formula:

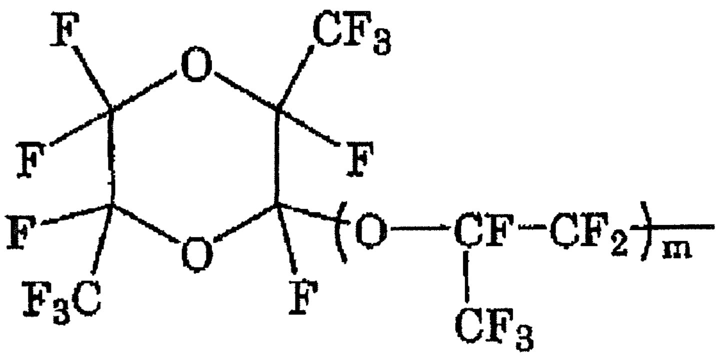

where m is 0 or an integer of 1 to 4; and those represented by the formula (6) wherein $Rf^8$ is a group represented by the following formula:

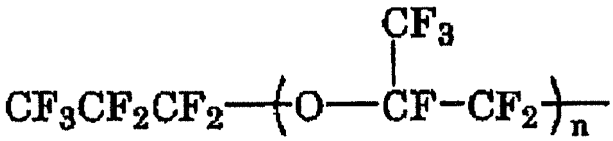

where n is an integer of 1 to 4.

Any perfluoroalkyl ethylene may be used, and examples thereof include perfluorobutyl ethylene (PFBE), perfluorohexyl ethylene (PFHE), and perfluorooctyl ethylene (PFOE).

The nitrile group-containing fluorine-containing vinyl ether is more preferably a fluorine-containing vinyl ether represented by $CF_2=CFORf^9CN$ (wherein $Rf^9$ represents a C2-C7 alkylene group in which an oxygen atom may optionally be inserted between two carbon atoms). Examples of the nitryl group-containing fluorine-containing vinyl ether include perfluoro[3-(1-methyl-2-vinyloxy-ethoxy)propionitrile] (CNVE).

The modifying monomer in the modified PTFE is preferably at least one selected from the group consisting of

HFP, CTFE, VDF, PMVE, PPVE, PFBE, PFHE, CNVE, and ethylene. It is more preferably at least one monomer selected from the group consisting of PMVE, PPVE, PFHE, CNVE, HFP, and CTFE.

The modified PTFE preferably includes 0.001 to 2 mol%, more preferably not less than 0.001 mol% but less than 1 mol%, still more preferably 0.001 to 0.5 mol%, particularly preferably 0.001 to 0.03 mol%, of the modifying monomer unit.

The amount of each monomer constituting the PTFE herein can be calculated by appropriate combination of NMR, FT-IR, elemental analysis, and X-ray fluorescence analysis in accordance with the type of the monomer.

The PTFE obtained by the production method of the present invention preferably has a melt flow rate (MFR) of not lower than 0 g/10 min but lower than 80 g/10 min. The MFR is more preferably not higher than 30 g/10 min, still more preferably not higher than 10 g/10 min, further more preferably not higher than 5 g/10 min.

A low MFR means a high molecular weight of PTFE. The aqueous dispersion can contain PTFE particles having a high molecular weight as well as a significantly small particle size.

The MFR herein is a value obtained as the mass (g/10 min) of the polymer flowed out of a nozzle (inner diameter: 2 mm, length: 8 mm) per 10 minutes determined using a melt indexer (Yasuda Seiki Seisakusho Ltd.) by the method in conformity with ASTM D1238 at a predetermined measurement temperature and load depending on the type of the fluoropolymer (for example, the temperature is 372°C for. PFA and FEP, 297°C for ETFE, and 380°C for PTFE, and the load is 5 kg for PFA, FEP, ETFE, and PTFE).

The PTFE obtained by the production method of the present invention has a melting point of 324°C to 360°C. The melting point is preferably 350°C or lower, more preferably 348°C or lower.

The melting point herein is a temperature corresponding to the local maximum on a heat-of-fusion curve obtained by heating 3 mg of a sample having no history of being heated up to 300°C or higher using a differential scanning calorimeter (DSC) at a temperature-increasing rate of 10°C/min.

The PTFE obtained by the production method of the present invention preferably has an initial pyrolysis temperature of 400°C or higher. The initial pyrolysis temperature is more preferably 420°C or higher, still more preferably 430°C or higher.

The initial pyrolysis temperature herein is a temperature at which the amount of a sample is reduced by 1 mass% when 10 mg of the sample is heated from room temperature at a temperature-increasing rate of 10°C/min using a thermogravimetry-differential thermal analysis (TG-DTA) device (trade name: TG/DTA6200, Seiko Instruments Inc.).

The melt-fabricable fluororesin is preferably at least one fluororesin selected from the group consisting of TFE/PAVE copolymers (PFA), TFE/HFP copolymers (FEP), ethylene (Et)/TFE copolymers (ETFE), Et/TFE/HFP copolymers, polychlorotrifluoroethylene (PCTFE), CTFE/TFE copolymers, Et/CTFE copolymers, and PVF. It is more preferably at least one perfluororesin selected from the group consisting of PFA and FEP.

The PFA may be any one, and is preferably a copolymer including a TFE unit and a PAVE unit at a TFE/PAVE mole ratio of not lower than 70/30 but lower than 99/1. The mole ratio is more preferably not lower than 70/30 but not higher than 98.9/1.1, still more preferably not lower than 80/20 but not higher than 98.9/1.1. Too small an amount of the TFE unit tends to cause impaired mechanical properties, whereas too large an amount thereof tends to cause so high a melting point, impairing the moldability. The PFA is also preferably a copolymer including 0.1 to 10 mol% of a monomer unit derived from a monomer copolymerizable with TFE and PAVE and 90 to 99.9 mol% in total of the TFE unit and the PAVE unit. Examples of the monomer copolymerizable with TFE and PAVE include HFP, vinyl monomers represented by $CZ^3Z^4=CZ^5(CF_2)_nZ^6$ (wherein $Z^3$, $Z^4$, and $Z^5$ may be the same as or different from each other, and are each a hydrogen atom or a fluorine atom; $Z^6$ is a hydrogen atom, a fluorine atom, or a chlorine atom; and n is an integer of 2 to 10), and alkyl perfluorovinyl ether derivatives represented by $CF_2=CF-OCH_2-Rf^7$ (wherein $Rf^7$ is a C1-C5 perfluoroalkyl group).

The PFA has a lower melting point than the PTFE, and the melting point is preferably not lower than 180°C but lower than 324°C, more preferably 230°C to 320°C, still more preferably 280°C to 320°C.

The PFA preferably has a melt flow rate (MFR) of 1 to 500 g/10 min.

The PFA preferably has an initial pyrolysis temperature of 380°C or higher. The initial pyrolysis temperature is more preferably 400°C or higher, still more preferably 410°C or higher.

The FEP may be any one, and is preferably a copolymer including a TFE unit and a HFP unit at a TFE/HFP mole ratio of not lower than 70/30 but lower than 99/1. The mole ratio is more preferably not lower than 70/30 but not higher than 98.9/1.1, and still more preferably not lower than 80/20 but not higher than 98.9/1.1. Too small an amount of the TFE unit tends to cause impaired mechanical properties, whereas too large an amount thereof tends to cause so high a melting point, impairing the moldability. The FEP is also preferably a copolymer including 0.1 to 10 mol% of a monomer unit derived from a monomer copolymerizable with TFE and HFP and 90 to 99.9 mol% in total of the TFE unit and the HFP unit. Examples of the monomer copolymerizable with TFE and HFP include PAVE and alkyl perfluorovinyl ether derivatives.

The FEP has a lower melting point than the PTFE, and the melting point is preferably not lower than 150°C but lower than 324°C, more preferably 200°C to 320°C, still more preferably 240°C to 320°C.

The FEP preferably has a MFR of 1 to 500 g/10 min.

The FEP preferably has an initial pyrolysis temperature of 360°C or higher. The initial pyrolysis temperature is more preferably 380°C or higher, still more preferably 390°C or higher.

The ETFE is preferably a copolymer including a TFE unit and an ethylene unit at a TFE/ethylene mole ratio of not lower than 20/80 but not higher than 90/10. The mole ratio is more preferably not lower than 37/63 but not higher than 85/15, still more preferably not lower than 38/62 but not higher than 80/20. The ETFE may be a copolymer including TFE, ethylene, and a monomer copolymerizable with TFE and ethylene. Examples of the copolymerizable monomer include monomers represented by $CH_2=CX^5Rf^3$, $CF_2=CFRf^3$, $CF_2=CFORf^3$, or $CH_2=C(Rf^3)_2$ (wherein $X^5$ is a hydrogen atom or a fluorine atom; and $Rf^3$ is a fluoroalkyl group which may optionally have an ether bond). Preferred among these are fluorine-containing vinyl monomers represented by $CF_2=CFRf^3$, $CF_2=CFORf^3$, or $CH_2=CX^5Rf^3$. More preferred are HFP, perfluoro(alkyl vinyl ethers) represented by $CF_2=CF-ORf^4$ (wherein $Rf^4$ is a C1-C5 perfluoroalkyl group), and fluorine-containing vinyl monomers represented by $CH_2=CX^5Rf^3$ (wherein $Rf^3$ is a C1-C8 fluoroalkyl group). The monomer copolymerizable with TFE and ethylene may also be an unsaturated aliphatic carboxylic acid such as itaconic acid or itaconic anhydride. The amount of the monomer copolymerizable with TFE and ethylene is preferably 0.1 to 10 mol%, more preferably 0.1 to 5 mol%, particularly preferably 0.2 to 4 mol%, relative to the fluorine-containing polymer.

The ETFE has a lower melting point than the PTFE, and the melting point is preferably not lower than 140°C but lower than 324°C, more preferably 160°C to 320°C, still more preferably 195°C to 320°C.

The ETFE preferably has a MFR of 1 to 500 g/10 min.

The ETFE preferably has an initial pyrolysis temperature of 330°C or higher. The initial pyrolysis temperature is more preferably 340°C or higher, still more preferably 350°C or higher.

The amount of each monomer unit in the aforementioned copolymer can be calculated by appropriate combination of NMR, FT-IR, elemental analysis, and X-ray fluorescence analysis in accordance with the type of the monomer.

The fluoropolymer is preferably in the form of particles having a volume average particle size of not smaller than 0.1 nm but smaller than 20 nm. The particles having a volume average particle size within the above range can be significantly finely dispersed in a matrix material, exerting the effects of further improving the smoothness and the texture of the coating surface. Use of the fluoropolymer particles having a volume average particle size within the above range in multistage polymerization can provide an aqueous dispersion which contains fluororesin particles having a significantly small particle size. The particles having too large a volume average particle size may lead to an aqueous dispersion which contains fluororesin particles having a significantly large particle size, impairing the reaction stability and generating unexpected coagulum during the polymerization in some cases. Use of fluoropolymer particles having too large a volume average particle size in multistage polymerization fails to provide an aqueous dispersion which contains fluororesin particles having a significantly small particle size and which is excellent in dispersion stability. Fluoropolymer particles having a volume average particle size of smaller than 0.1 nm are not easy to produce. The volume average particle size of the fluoropolymer particles is more preferably not smaller than 0.5 nm, particularly preferably not smaller than 1.0 nm, while more preferably not greater than 15 nm, still more preferably not greater than 10 nm, further more preferably smaller than 5 nm, particularly preferably smaller than 3 nm.

The volume average particle size is determined by dynamic light scattering. In the determination, a fluoropolymer aqueous dispersion with a fluoropolymer solid content of 1.0 mass% is prepared. The value is determined using ELSZ-1000S (Otsuka Electronics Co., Ltd.) at 25°C with 70 accumulations. The applied refractive index of the solvent (water) is 1.3328 and the viscosity of the solvent (water) is 0.8878 mPa·s. The volume average particle size is the average particle size of the particles dispersed in the state of primary particles.

The fluoropolymer is preferably not a fluorinated ionomer because it is difficult to apply a fluorinated ionomer to the use of the fluoropolymer aqueous dispersion to be mentioned later.

The fluoropolymer preferably has an equivalent weight (EW) of not less than 6,000. The equivalent weight (EW) is a dry weight per equivalent of an ion-exchange group. A high equivalent weight (EW) of the fluoropolymer indicates that the monomers constituting the fluoropolymer hardly include an ionomer. Even though the fluoropolymer hardly includes an ionomer, it has a significantly small volume average particle size. The equivalent weight (EW) is more preferably not less than 10,000. The upper limit may be any value, and is preferably not more than 50,000,000.

The method for producing an aqueous dispersion of fluoropolymer particles disclosed in Patent Literature 3 essentially includes forming dispersed particles of a fluorinated ionomer in the first stage. Thus, the finally produced fluoropolymer has poor heat resistance, and bubbles may be generated and staining may occur when the resulting fluoropolymer is heated. In the production method of the present invention, the equivalent weight (EW) of the resulting fluoropolymer is not less than 6,000. Thus, the resulting fluoropolymer has excellent heat resistance.

The equivalent weight can be determined as follows.

Hydrochloric acid or nitric acid is added to an aqueous dispersion containing a fluoropolymer so as to coagulate the fluoropolymer. The coagulated fluoropolymer is washed with pure water until the solution after the washing becomes neutral, and then heat-dried in vacuo at 110°C or lower until the moisture is removed. Then, about 0.3 g of the dried fluoropolymer is immersed in 30 mL of a saturated NaCl aqueous solution at 25°C and left to stand under stirring for 30

minutes. Next, the protons in the saturated NaCl aqueous solution are subjected to neutralization titration using a 0.01 N solution of sodium hydroxide in water with a phenolphthalein indicator. The neutralization provides a fluoropolymer including a sodium ion as the counterion for the ion-exchange group. This fluoropolymer is rinsed with pure water, and then vacuum-dried and weighed. The equivalent weight EW (g/eq) is then determined by the following formula:

$$EW = (W/M) - 22$$

wherein M (mmol) represents the amount of the sodium hydroxide used for neutralization and W (mg) represents the mass of the fluoropolymer including a sodium ion as the counterion for the ion-exchange group.

The polymerization initiator may be any initiator capable of generating radicals within the above range of the polymerization temperature, and any known oil-soluble and/or water-soluble polymerization initiator can be used. Further, the initiator may be combined with a reducing agent to form a redox agent, for example, to start the polymerization. The concentration of the polymerization initiator can appropriately be determined in accordance with the types of the monomers, the target molecular weight of a polymer, and the reaction rate.

The polymerization initiator is preferably at least one selected from the group consisting of persulfates and organic peroxides. In order to achieve good dispersion stability of the fluoropolymer particles in the aqueous dispersion, the polymerization initiator may be any of persulfates such as ammonium persulfate and potassium persulfate and water-soluble organic peroxides such as disuccinic acid peroxide and diglutamic acid peroxide. Considering the handleability and the cost, ammonium persulfate is preferred.

The amount of the polymerization initiator can be appropriately determined in accordance with the MFR of the target fluoropolymer. The amount of the polymerization initiator is usually preferably an amount corresponding to 1 to 5,000 ppm of the aqueous medium. The upper limit thereof is more preferably 500 ppm, still more preferably 300 ppm, further more preferably 100 ppm. The lower limit thereof is more preferably 2 ppm. In order to achieve good dispersion stability of the fluoropolymer particles in the aqueous dispersion, the amount of the polymerization initiator is preferably an amount corresponding to 2 ppm or more of the aqueous medium.

The aqueous medium is a reaction medium in which the polymerization proceeds, and is a liquid that contains water. The aqueous medium may be any medium that contains water, and it may be one containing water and, for example, any of fluorine-free organic solvents such as alcohols, ethers, and ketones, and/or fluorinated organic solvents having a boiling point of 40°C or lower.

The polymerization in the production method of the present invention may be performed in the presence of a chain-transfer agent. The chain-transfer agent may be a known one. Examples thereof include saturated hydrocarbons such as methane, ethane, propane, and butane; halogenated hydrocarbons such as chloromethane, dichloromethane, and difluoroethane; alcohols such as methanol and ethanol; and hydrogen. The chain-transfer agent is preferably one which is in the gas state at room temperature and atmospheric pressure, and more preferably ethane or propane.

The amount of the chain-transfer agent is usually 1 to 50,000 ppm, preferably 1 to 20,000 ppm, relative to the whole amount of the fluoromonomer supplied.

Use of a large amount of the fluorosurfactant and a small amount of the chain-transfer agent is also one preferred condition of the above method. Such a condition enables easy production of fluoropolymer particles having a high molecular weight and a small particle size.

A particularly preferred condition is to use 6,000 ppm or more of the fluorosurfactant and 20,000 ppm or less of the chain-transfer agent. In such a preferred condition, the amount of the fluorosurfactant is more preferably 8,000 ppm or more, still more preferably 18,000 ppm or more, particularly preferably 20,000 ppm or more, while preferably 400,000 ppm or less, more preferably 300,000 ppm or less. The amount of the chain-transfer agent is more preferably 10,000 ppm or less, still more preferably 7,000 ppm or less, while preferably 50 ppm or more, more preferably 100 ppm or more.

The chain-transfer agent may be added to a reactor at one time before the start of the polymerization, may be added in portions during the polymerization, or may continually be added during the polymerization.

In the emulsion polymerization, a stabilizer may be added. Preferred examples of the stabilizer include paraffin wax (hydrocarbons having 16 or more carbon atoms), fluorine-based oils, fluorine-based compounds, and silicone oil, and particularly preferred is paraffin wax. The melting point of the paraffin wax is usually preferably 40°C to 65°C. Emulsion polymerization in an aqueous medium containing such a stabilizer inhibits coagulation of emulsified particles generated in the polymerization system, providing more stable emulsified particles.

In order to emulsifying PTFE more stably, the amount of the paraffin wax is preferably 0.1 to 12 parts by mass relative to 100 parts by mass of the aqueous medium. The lower limit of the amount is more preferably 1 part by mass and the upper limit thereof is more preferably 8 parts by mass, relative to 100 parts by mass of the aqueous medium.

The polymerization is preferably performed at 10°C to 95°C, more preferably not lower than 30°C but not higher

than 90°C.

The polymerization is preferably performed at 0.05 to 3.9 MPaG, more preferably not lower than 0.1 MPaG but not higher than 3.0 MPaG.

The polymerization is performed as follows. Specifically, TFE and optionally a modifying monomer are put into a polymerization reactor. The contents of the reactor are stirred and the temperature in the reactor is maintained at a predetermined polymerization temperature. A polymerization initiator is added to the reactor to initiate the polymerization reaction. If necessary, components such as an aqueous medium and additives (e.g., a stabilizer) may be put into the reactor before the start of the polymerization reaction. The TFE, the modifying monomer, the polymerization initiator, and the chain-transfer agent may additionally be added in accordance with the respective purposes after the start of the polymerization reaction.

The polymerization can provide an aqueous dispersion containing fluoropolymer particles. The resulting aqueous dispersion has a solid content of about 1 to 40 mass%, preferably 5 to 30 mass%. The solid content herein is determined as follows. Specifically, 1 g of the aqueous dispersion is dried in a forced air oven at 150°C for 60 minutes, and the proportion (in terms of percentage) of the mass of residue after heating relative to the mass (1 g) of the aqueous dispersion is defined as the solid content.

The fluoropolymer aqueous dispersion of the present invention preferably satisfies that the precipitation amount of the fluoropolymer particles in the fluoropolymer aqueous dispersion having a solid content of the fluoropolymer particles of 5.0 mass% is not more than 10.0 mass%, more preferably not more than 7.0 mass%, still more preferably not more than 5.5 mass%, particularly preferably not more than 3.0 mass%. The lower limit thereof may be any value.

The "precipitation amount of the fluoropolymer particles" herein can be measured as follows, for example. First, 30 g of the fluoropolymer aqueous dispersion maintained at 25°C is put in a container for exclusive use, and then stirred at 5000 rpm for five minutes using a centrifuge (himac CT15D, Hitachi Koki Co., Ltd.) equipped with a rotor (RT15A7 model), separating the precipitation layer from the fluoropolymer aqueous dispersion layer. The fluoropolymer aqueous dispersion layer is isolated and the solid content is determined. The precipitation amount is then calculated from the difference between the solid content in the fluoropolymer aqueous dispersion layer and the original solid content in the fluoropolymer aqueous dispersion used. The precipitation amount is determined in terms of proportion (mass%) relative to the amount of the fluoropolymer contained in the fluoropolymer aqueous dispersion used. The lower the proportion is, the better the storage stability is.

The fluoropolymer aqueous dispersion of the present invention preferably satisfies that the mesh-up amount of the fluoropolymer particles in the fluoropolymer aqueous dispersion having a solid content of the fluoropolymer particles of 5.0 mass% is not more than 2.5 mass%, more preferably not more than 2.0 mass%, still more preferably not more than 1.8 mass%, particularly preferably not more than 1.3 mass%. The lower limit thereof may be any value.

The "mesh-up amount of the fluoropolymer particles" herein can be determined as follows, for example. First, 100 g of the fluoropolymer aqueous dispersion maintained at 65°C is circulated for two hours at a discharge flow rate of 10 L/h using a peristaltic pump (roller pump RP-2000, Tokyo Rikakikai Co, Ltd.) equipped with a tube (Tygon tube) having an inner diameter of 4.76 mm and an outer diameter of 7.94 mm. Then, the aqueous dispersion is filtered through a 200-mesh stainless steel net. The amount of the substance remaining on the net is measured in terms of proportion (mass%) relative to the amount of the fluoropolymer contained in the fluoropolymer aqueous dispersion used. The lower the proportion is, the better the mechanical stability is.

The polymerization in the production method of the present invention is preferably performed in the absence of a fluorine-containing compound represented by the following formula (2):

$$X\text{-}(CF_2)_{m2}\text{-}Y \qquad (2)$$

wherein X is H or F; m2 is an integer of 6 or greater; and Y is $-SO_3M$, $-SO_4M$, $-SO_3R$, $-SO_4R$, -COOM, $-PO_3M_2$, or $-PO_4M_2$, where M is H, $NH_4$, or an alkali metal and R is a C1-C12 alkyl group.

The polymerization in the production method of the present invention is preferably emulsion polymerization. The polymerization in the production method of the present invention is preferably radical polymerization.

The fluoropolymer aqueous dispersion produced by the production method of the present invention may be subjected to multistage polymerization. Since the fluoropolymer aqueous dispersion produced by the production method of the present invention contains fluoropolymer particles having a significantly small particle size, such multistage polymerization can provide an aqueous dispersion which contains fluororesin particles each having a core-shell structure whose core portion is formed from the fluoropolymer particle and having a significantly small particle size.

Further, fluoropolymer fine powder can also be produced by coagulating the fluoropolymer aqueous dispersion produced by the production method of the present invention, washing the resulting coagulated particles, and drying the washed particles.

The above coagulation, washing, and drying may be performed by conventionally known methods.

Further, a fluoropolymer aqueous dispersion containing no fluorosurfactant and having a high solid content can

be produced by a production method including a step (I) of bringing the fluoropolymer aqueous dispersion produced by the production method of the present invention into contact with an ion exchange resin in the presence of a nonionic surfactant and a step (II) of condensing the aqueous dispersion produced in the step (I) such that the solid content in the aqueous dispersion is adjusted to 30 to 70 mass% relative to 100 mass% of the aqueous dispersion.

The solid content of the condensed fluoropolymer aqueous dispersion is determined as follows. Specifically, 1 g of the aqueous dispersion is dried in a forced air oven at 300°C for 60 minutes, and the proportion (in terms of percentage) of the mass of residue after heating relative to the mass (1 g) of the aqueous dispersion is defined as the solid content.

The step of bringing the aqueous dispersion into contact with an ion exchange resin may be performed by a conventionally known method. The condensing method may be as mentioned above, for example.

The production method of the present invention preferably further includes, after the step (I), a step of separating the fluoropolymer aqueous dispersion from the ion exchange resin and collecting the fluoropolymer aqueous dispersion.

The nonionic surfactant may be any known fluorine-free nonionic compound. Examples of the nonionic surfactant include: ether-type nonionic surfactants such as polyoxyethylene alkyl phenyl ethers, polyoxyethylene alkyl ethers, and polyoxyethylene alkylene alkyl ethers; polyoxyethylene derivatives such as ethylene oxide/propylene oxide block copolymers; ester-type nonionic surfactants such as sorbitan fatty acid esters, polyoxyethylene sorbitan fatty acid esters, polyoxyethylene sorbitol fatty acid esters, glycerin fatty acid esters, and polyoxyethylene fatty acid esters; and amine-type nonionic surfactants such as polyoxyethylene alkylamines and alkyl alkanolamides. These surfactants are non-fluorinated nonionic surfactants.

The hydrophobic group in the compound constituting the nonionic surfactant may be any of alkyl phenol groups, linear alkyl groups, and branched alkyl groups, and is preferably a compound free from a benzene ring, such as a compound having no alkyl phenol group in the structure.

The nonionic surfactant is particularly preferably a polyoxyethylene alkyl ether. The polyoxyethylene alkyl ether is preferably one having a polyoxyethylene alkyl ether structure with a C10-C20 alkyl group, more preferably one having a polyoxyethylene alkyl ether structure with a C10-C15 alkyl group. The alkyl group in the polyoxyethylene alkyl ether structure preferably has a branched structure.

Examples of commercially available products of the polyoxyethylene alkyl ether include Genapol X080 (trade name, Clariant), TERGITOL 9-S-15 (trade name, Clariant), NOIGEN TDS-80 (trade name, DKS Co., Ltd.), and LEOCOL TD-90 (trade name, Lion Corp.).

The fluoropolymer aqueous dispersion produced by the production method of the present invention and the fluoropolymer fine powder can suitably be used as, for example, additives for modifying molding materials, inks, cosmetics, coating materials, grease, parts of office automation devices, and toners; and additives for plating solutions. Examples of the molding materials include engineering plastics such as polyoxybenzoyl polyester, polyimide, polyamide, polyamide-imide, polyacetal, polycarbonate, and polyphenylene sulfide.

The fluoropolymer aqueous dispersion produced by the production method of the present invention and the fluoropolymer fine powder can suitably be used as additives for molding materials for the purposes of, for example, improving non-stickiness and sliding properties of rollers for copying devices; improving the texture of engineering plastic molded products, such as surface sheets of furniture, dashboard of automobiles, and covers of consumer electrical appliances; and improving the smoothness and abrasion resistance of machine parts generating mechanical friction, such as light-load bearings, gears, cams, buttons of touch-tone phones, movie projectors, camera parts, and sliding parts. Also, they can suitably be used as processing aids for engineering plastics.

The fluoropolymer aqueous dispersion produced by the production method of the present invention and the fluoropolymer fine powder can be used as additives for coating materials for the purpose of improving the smoothness of varnish and paint. The fluoropolymer aqueous dispersion of the present invention and the fluoropolymer fine powder can be used as additives for cosmetics for the purpose of, for example, improving the smoothness of cosmetics such as foundation.

The fluoropolymer aqueous dispersion produced by the production method of the present invention and the fluoropolymer fine powder can also be suitably used for the purpose of improving the oil or water repellency of articles such as wax and of improving the smoothness of grease and toners.

The fluoropolymer aqueous dispersion produced by the production method of the present invention and the fluoropolymer fine powder can also be used as, for example, electrode binders for secondary batteries and fuel cells, hardness adjusters for electrode binders, and water-repellents for electrode surfaces. The fluoropolymer aqueous dispersion is more suitable for this use than the fluoropolymer fine powder in many cases.

## EXAMPLES

Next, the present invention is described below referring to, but not limited to, examples.

The values in the examples are determined as follows.

(Volume average particle size)

The volume average particle size is determined by dynamic light scattering (DLS). The dynamic light scattering (DLS) measurement was performed using ELSZ-1000S (Otsuka Electronics Co., Ltd.) at 25°C. A fluoropolymer aqueous dispersion having a fluoropolymer solid content of 1.0 mass% was used as a sample. The applied refractive index of the solvent (water) was 1.3328 and the viscosity of the solvent (water) was 0.8878 mPa·s. The measurement was performed using 660-nm laser as a light source and the light scattered from the sample was detected at 165° which is close to the backscattering angle. One measurement included 70 accumulations, and the data was imported over about 3 minutes. In accordance with the scattering intensity of the sample, the device automatically adjusted the intensity of the laser light applied to the sample and the position of measurement so as to give an optimal scattering intensity (10000 to 50000 cps).

Based on the resulting autocorrelation function, the ELSZ-1000 software provided the average particle size (d) and the polydispersity index (PI) by the Cumulant method adapted to the autocorrelation function. Still, the information regarding the particle size distribution is insufficient.

Thus, in order to obtain the particle size distribution, the histogram method was performed in which approximation is performed by causing a limited number of rj to represent the distribution. The non-linear least squares method used in the approximation was a modified Marquardt method. The resulting particle size distribution is a distribution dependent to the scattering intensity, and thus converted into a weight distribution by the Rayleigh-Gans-Debye function. The average value in the weight distribution was defined as the weight average particle size. The specific gravity of the particles in the sample is identical regardless of the particle size. Thus, the weight average particle size is considered as equivalent to the volume average particle size.

(Modified amount)

The modified amount was determined by appropriate combination of NMR, FT-IR, elemental analysis, and X-ray fluorescence analysis in accordance with the type of the monomer.

(Melting point)

The melting point was determined as a temperature corresponding to the local maximum on a heat-of-fusion curve obtained by heating 3 mg of a sample having no history of being heated up to 300°C or higher using a differential scanning calorimeter (DSC) at a temperature-increasing rate of 10°C/min.

(Initial pyrolysis temperature)

The initial pyrolysis temperature was determined as a temperature at which the amount of a sample was reduced by 1 mass% when 10 mg of the sample was heated from room temperature at a temperature-increasing rate of 10°C/min using a thermogravimetric-differential thermal analysis (TG-DTA) device (trade name: TG/DTA6200, Seiko Instruments Inc.).

(Solid content)

The solid content of the pre-condensation aqueous dispersion obtained by polymerization was a value corresponding to the proportion (in terms of percentage) of the mass of residue after heating (which was prepared by drying 1 g of the aqueous dispersion in a forced air oven at 150°C for 60 minutes) relative to the mass (1 g) of the aqueous dispersion.

The solid content of the condensed fluoropolymer aqueous dispersion was a value corresponding to the proportion (in terms of percentage) of the mass of residue after heating (which was prepared by drying 1 g of the aqueous dispersion in a forced air oven at 300°C for 60 minutes) relative to the mass (1 g) of the aqueous dispersion.

(Melt flow rate (MFR))

The MFR was determined as the mass (g/10 min) of the polymer flowed out of a nozzle (inner diameter: 2 mm, length: 8 mm) per 10 minutes determined using a melt indexer (Yasuda Seiki Seisakusho Ltd.) by the method in conformity with ASTM D1238 at a predetermined measurement temperature and load depending on the type of the fluoropolymer (for example, the temperature was 372°C for PFA and FEP, 297°C for ETFE, and 380°C for PTFE, and the load was 5 kg for PFA, FEP, ETFE, and PTFE).

If the amount of the polymer flowed out was very slight and was difficult to measure, it was regarded as 0.2

g/10 min or less.

(Evaluation of dispersion stability)

(Storage stability test)

First, 30 g of the fluoropolymer aqueous dispersion maintained at 25°C was put in a container for exclusive use, and then stirred at 5000 rpm for five minutes using a centrifuge (himac CT15D, Hitachi Koki Co., Ltd.) equipped with a rotor (RT15A7 model), separating the precipitation layer from the fluoropolymer aqueous dispersion layer. The fluoropolymer aqueous dispersion layer was isolated and the solid content was determined. The precipitation amount was then calculated from the difference between the solid content in the fluoropolymer aqueous dispersion layer and the original solid content in the fluoropolymer aqueous dispersion used. The precipitation amount was determined in terms of proportion (mass%) relative to the amount of the fluoropolymer contained in the fluoropolymer aqueous dispersion used. The lower the proportion is, the better the storage stability is.

(Mechanical stability test)

First, 100 g of the fluoropolymer aqueous dispersion maintained at 65°C was circulated for two hours at a discharge flow rate of 10 L/h using a peristaltic pump (roller pump RP-2000, Tokyo Rikakikai Co, Ltd.) equipped with a tube (Tygon tube) having an inner diameter of 4.76 mm and an outer diameter of 7.94 mm. Then, the fluoropolymer aqueous dispersion was filtered through a 200-mesh stainless steel net. The amount of the substance remaining on the net was measured in terms of proportion (mass%) relative to the amount of the fluoropolymer contained in the fluoropolymer aqueous dispersion used. The lower the proportion is, the better the mechanical stability is.

(Example 1)

A 1-L glass reactor equipped with a stirrer was charged with 530 g of deionized water, 30 g of paraffin wax, and 49.5 g of an ammonium perfluorohexanoate (APFH) dispersant. Next, the contents of the reactor were heated up to 85°C and sucked, and simultaneously the reactor was purged with a TFE monomer, thereby removing the oxygen in the reactor. Then, 0.03 g of ethane gas was added to the reactor, and the contents were stirred at 540 rpm. The TFE monomer was added to the reactor until the inner pressure reached 0.73 MPaG. An initiator prepared by dissolving 0.110 g of ammonium persulfate (APS) in 20 g of deionized water was charged into the reactor, and the pressure in the reactor was adjusted to 0.83 MPaG. The charging of the initiator was followed by a decrease in the pressure, which means that the start of the polymerization was observed. The TFE monomer was added to the reactor to maintain the pressure, and the polymerization was continued until about 140 g of the TFE monomer was consumed in the reaction. Thereafter, the gas in the reactor was discharged until the pressure reached normal pressure. The contents were then taken out of the reactor and cooled down. The supernatant paraffin wax was removed from the resulting PTFE aqueous dispersion.

The resulting PTFE aqueous dispersion had a solid content of 20.9 mass% and a volume average particle size of 1.2 nm.

Nitric acid was added to the resulting PTFE aqueous dispersion, and the mixture was vigorously stirred until coagulation occurred. The resulting coagulum was washed with deionized water, and then dried at 150°C. Thereby, PTFE powder was obtained. This PTFE powder had a MFR of 16.7 g/10 min, a melting point of 327.2°C, and an initial pyrolysis temperature at 1 mass% of 473.0°C.

Deionized water was added to the resulting PTFE aqueous dispersion to adjust the solid content to 5.0 mass%, and the storage stability thereof was evaluated. The precipitation amount was 0.1 mass%.

APFH, which is the same dispersant as used in the polymerization, was added to the PTFE aqueous dispersion to adjust the amount of the dispersant to 10.0 mass%. Deionized water was further added to the dispersion to adjust the solid content to 5.0 mass%, and the mechanical stability was evaluated. The mesh-up amount was 0.1 mass%.

Then, 100 g of the resulting PTFE aqueous dispersion was uniformly mixed with 2.0 g of a surfactant, and the mixture was passed through a column filled with an ion exchange resin. The resulting aqueous dispersion was maintained at 60°C, and the condensed phase provided by phase separation was collected. This condensed phase had a solid content of 62 mass%. Water and a surfactant were further added to the condensed phase to give a solid content of 60 mass% and a surfactant content of 8 mass%, and the pH was adjusted to 9.7.

(Control Example)

The polymerization was performed in the same manner as in Example 1 except that the amount of the ammonium

perfluorohexanoate (APFH) dispersant was not 49.5 g as in Example 1 but 55.0 g. The resulting PTFE aqueous dispersion had a solid content of 20.5 mass% and a volume average particle size of 0.9 nm.

In comparison with Example 1, the amount of change in the fluorosurfactant concentration in the aqueous medium was 10000 ppm and the amount of change in the volume average particle size was 0.3 nm. Thus, the amount of change in the volume average particle size was 0.03 nm per 1000 ppm of the fluorosurfactant in the aqueous medium.

(Example 2)

The polymerization was performed in the same manner as in Example 1 except that the polymerization temperature was not 85°C as in Example 1 but 70°C.

(Example 3)

The polymerization was performed in the same manner as in Example 1 except that the amount of the ammonium persulfate (APS) initiator was not 0.110 g as in Example 1 but 0.028 g.

(Example 4)

The polymerization was performed in the same manner as in Example 1 except that the amount of the ammonium persulfate (APS) initiator was not 0.110 g as in Example 1 but 0.006 g, the amount of the ammonium perfluorohexanoate (APFH) dispersant was not 49.5 g but 55.0 g, and the polymerization was continued until about 40 g of the TFE monomer was consumed in the reaction.

(Example 5)

The polymerization was performed in the same manner as in Example 1 except that the amount of the ammonium persulfate (APS) initiator was not 0.110 g as in Example 1 but 0.006 g, the amount of the ammonium perfluorohexanoate (APFH) dispersant was not 49.5 g but 27.5 g, and the polymerization was continued until about 10 g of the TFE monomer was consumed in the reaction.

(Example 6)

The polymerization was performed in the same manner as in Example 4 except that the amount of the ammonium perfluorohexanoate (APFH) dispersant was not 55.0 g as in Example 4 but 26.4 g.

(Example 7)

The polymerization was performed in the same manner as in Example 4 except that the amount of the ammonium perfluorohexanoate (APFH) dispersant was not 55.0 g as in Example 4 but 25.9 g.

(Example 8)

The polymerization was performed in the same manner as in Example 4 except that 55.0 g of the ammonium perfluorohexanoate (APFH) dispersant as in Example 4 was replaced by 20.9 g of an ammonium 2,3,3,3-tetrafluoro-2-[1,1,2,3,3,3-hexafluoro-2-(trifluoromethoxy)propoxy]-propanoate ($CF_3OCF(CF_3)CF_2OCF(CF_3)COONH_4$) (PMPA) dispersant.

(Example 9)

The polymerization was performed in the same manner as in Example 8 except that the amount of the ammonium 2,3,3,3-tetrafluoro-2-[1,1,2,3,3,3-hexafluoro-2-(trifluoromethoxy)propoxy]-propanoate ($CF_3OCF(CF_3)CF_2OCF(CF_3)COONH_4$) (PMPA) dispersant was not 20.9 g as in Example 8 but 13.8 g.

(Example 10)

The polymerization was performed in the same manner as in Example 8 except that the amount of the ammonium 2,3,3,3-tetrafluoro-2-[1,1,2,3,3,3-hexafluoro-2-(trifluoromethoxy)propoxy]-propanoate ($CF_3OCF(CF_3)CF_2OCF(CF_3)COONH_4$) (PMPA) dispersant was not 20.9 g as in Example 8 but 10.5 g.

(Example 11)

A 6-L stainless steel reactor equipped with a stirrer was charged with 2860 g of deionized water, 104 g of paraffin wax, and 288.0 g of an ammonium perfluorohexanoate (APFH) dispersant. Next, the contents of the reactor were heated up to 85°C and sucked, and simultaneously the reactor was purged with a TFE monomer, thereby removing the oxygen in the reactor. Then, 0.08 g of ethane gas was added to the reactor, and the contents were stirred at 250 rpm. The TFE monomer was added to the reactor until the inner pressure reached 0.25 MPaG. An initiator prepared by dissolving 0.029 g of ammonium persulfate (APS) in 20 g of deionized water was charged into the reactor, and the pressure in the reactor was adjusted to 0.30 MPaG. The charging of the initiator was followed by a decrease in the pressure, which means that the start of the polymerization was observed. The TFE monomer was added to the reactor to maintain the pressure, and the polymerization was continued until about 250 g of the TFE monomer was consumed in the reaction. Thereafter, the gas in the reactor was discharged until the pressure reached normal pressure. The contents were then taken out of the reactor and cooled down. The supernatant paraffin wax was removed from the resulting PTFE aqueous dispersion.

The resulting PTFE aqueous dispersion had a solid content of 6.0 mass% and a volume average particle size of 2.5 nm.

A portion of the resulting PTFE aqueous dispersion was frozen in a freezer. The frozen PTFE aqueous dispersion was left to stand until the temperature reached 25°C, and thereby a coagulated powder was obtained. The wet coagulated powder was washed with deionized water and then dried at 150°C. This PTFE powder had a MFR of 0.2 g/10 min or lower, a melting point of 329.5°C, and an initial pyrolysis temperature at 1 mass% of 490.8°C.

(Example 12)

The polymerization was performed in the same manner as in Example 11 except that 0.08 g of the ethane gas as in Example 11 was replaced by 0.10 g of PMVE.

(Example 13)

The polymerization was performed in the same manner as in Example 11 except that 0.08 g of the ethane gas as in Example 11 was replaced by 0.49 g of HFP, the reactor at a pressure of 0.30 MPaG was replaced by a reactor at a pressure of 0.20 MPaG, and the polymerization was continued until about 200 g of the TFE monomer was consumed in the reaction.

(Example 14)

The polymerization was performed in the same manner as in Example 4 except that 0.03 g of the ethane gas as in Example 4 was replaced by 0.41 g of PPVE.

(Example 15)

A 1-L glass reactor equipped with a stirrer was charged with 530 g of deionized water, 30 g of paraffin wax, and 55.0 g of an ammonium perfluorohexanoate (APFH) dispersant. Next, the contents of the reactor were heated up to 85°C and sucked, and simultaneously the reactor was purged with a TFE monomer, thereby removing the oxygen in the reactor. Then, 0.03 g of ethane gas and 0.20 g of perfluorohexylethylene (PFHE) were added to the reactor, and the contents were stirred at 540 rpm. The TFE monomer was added to the reactor until the inner pressure reached 0.73 MPaG. An initiator prepared by dissolving 0.006 g of ammonium persulfate (APS) in 20 g of deionized water was charged into the reactor, and the pressure in the reactor was adjusted to 0.83 MPaG. The charging of the initiator was followed by a decrease in the pressure, which means that the start of the polymerization was observed. The TFE monomer was added to the reactor to maintain the pressure, and the polymerization was continued until about 40 g of the TFE monomer was consumed in the reaction. Thereafter, the gas in the reactor was discharged until the pressure reached normal pressure. The contents were then taken out of the reactor and cooled down. The supernatant paraffin wax was removed from the resulting PTFE aqueous dispersion.

The resulting PTFE aqueous dispersion had a solid content of 6.6 mass% and a volume average particle size of 1.6 nm.

A portion of the resulting PTFE aqueous dispersion was frozen in a freezer. The frozen PTFE aqueous dispersion was left to stand until the temperature reached 25°C, and thereby a coagulated powder was obtained. The wet coagulated powder was washed with deionized water, and then dried at 150°C. This PTFE powder had a MFR of 0.2 g/10 min or lower, a melting point of 329.3°C, and an initial pyrolysis temperature at 1 mass% of 465.5°C.

(Example 16)

The polymerization was performed in the same manner as in Example 15 except that the polymerization temperature was not 85°C as in Example 15 but 70°C, the amount of the ammonium persulfate (APS) initiator was not 0.006 g but 0.110 g, the amount of the ammonium perfluorohexanoate (APFH) dispersant was not 55.0 g but 44.0 g, 0.20 g of the perfluorohexylethylene (PFHE) was replaced by 1.12 g of perfluoro[3-(1-methyl-2-vinyloxy-ethoxy)propionitrile] (CNVE), and the polymerization was continued until about 140 g of the TFE monomer was consumed in the reaction.

(Example 17)

The polymerization was performed in the same manner as in Example 16 except that 44.0 g of the ammonium perfluorohexanoate (APFH) dispersant as in Example 16 was replaced by 22.0 g of an ammonium 2,3,3,3-tetrafluoro-2-[1,1,2,3,3,3-hexafluoro-2-(trifluoromethoxy)propoxy]-propanoate ($CF_3OCF(CF_3)CF_2OCF(CF_3)COONH_4$) (PMPA) dispersant.

(Example 18)

The polymerization was performed in the same manner as in Example 15 except that 0.20 g of the perfluorohexyl ethylene (PFHE) as in Example 15 was replaced by 0.18 g of CTFE.

(Example 19)

The polymerization was performed in the same manner as in Example 15 except that the amount of the ammonium persulfate (APS) initiator was not 0.006 g as in Example 15 but 0.110 g, the amount of the ammonium perfluorohexanoate (APFH) dispersant was not 55.0 g but 49.5 g, 0.20 g of the perfluorohexylethylene (PFHE) was replaced by 8.80 g of PPVE, and the polymerization was continued until about 160 g of the TFE monomer was consumed in the reaction.

(Example 20)

The polymerization was performed in the same manner as in Example 16 except that the amount of the ammonium persulfate (APS) initiator was not 0.110 g as in Example 16 but 1.100 g.

(Example 21)

The polymerization was performed in the same manner as in Example 16 except that 44.0 g of the ammonium perfluorohexanoate (APFH) dispersant as in Example 16 was replaced by 33.0 g of a perfluoropolyether alkyl acid ammonium salt dispersant ($C_3F_7OCF(CF_3)COONH_4$) (PFPE).

(Example 22)

The polymerization was performed in the same manner as in Example 4 except that 55.0 g of the ammonium perfluorohexanoate (APFH) dispersant as in Example 4 was replaced by 100.0 g of an ammonium perfluoropentanoate (APFP) dispersant and the polymerization was continued until about 140 g of the TFE monomer was consumed in the reaction.

(Example 23)

The polymerization was performed in the same manner as in Example 4 except that 55.0 g of the ammonium perfluorohexanoate (APFH) dispersant as in Example 4 was replaced by 7.7 g a perfluoroalkyl alkylene sulfonic acid dispersant ($C_6F_{13}(CH_2)_2SO_3H$) (6,2-PFAS).

(Example 24)

The polymerization was performed in the same manner as in Example 4 except that 55.0 g of the ammonium perfluorohexanoate (APFH) dispersant as in Example 4 was replaced by 5.0 g a perfluoroalkyl alkylene sulfonic acid dispersant ($C_6F_{13}(CH_2)_2SO_3H$) (6,2-PFAS).

(Example 25)

The polymerization was performed in the same manner as in Example 4 except that 55.0 g of the ammonium perfluorohexanoate (APFH) dispersant as in Example 4 was replaced by 3.9 g of a perfluoroalkyl alkylene sulfonic acid dispersant ($C_6F_{13}(CH_2)_2SO_3H$) (6,2-PFAS).

(Comparative Example 1)

The polymerization was performed in the same manner as in Example 8 except that the amount of the ammonium 2,3,3,3-tetrafluoro-2-[1,1,2,3,3,3-hexafluoro-2-(trifluoromethoxy)propoxy]-propanoate ($CF_3OCF(CF_3)CF_2OCF(CF_3)COONH_4$) (PMPA) dispersant was not 20.9 g as in Example 8 but 8.8 g.

(Comparative Example 2)

The polymerization was performed in the same manner as in Example 4 except that the amount of the ammonium perfluorohexanoate (APFH) dispersant was not 55.0 g as in Example 4 but 22.0 g.

Table 1 and Table 2 show the polymerization conditions and the evaluation results on the PTFE aqueous dispersions in the respective examples.

[Table 1]

| | Temperature | Pressure | Initiator | | Emulsifier | | Modifier | | Chain-transfer agent | |
|---|---|---|---|---|---|---|---|---|---|---|
| | | | Type | Amount | Type | Amount | Type | Amount | Type | Amount |
| | °C | MPaG | - | g | - | g | - | g | - | g |
| Example 1 | 85 | 0.83 | APS | 0.110 | APFH | 49.5 | - | - | Ethane | 0.03 |
| Example 2 | 70 | 0.83 | APS | 0.110 | APFH | 49.5 | - | - | Ethane | 0.03 |
| Example 3 | 85 | 0.83 | APS | 0.028 | APFH | 49.5 | - | - | Ethane | 0.03 |
| Example 4 | B5 | 0.83 | APS | 0.006 | APFH | 55.0 | - | - | Ethane | 0.03 |
| Example 5 | 85 | 0.83 | APS | 0.008 | APFH | 27.5 | - | - | Ethane | 0.03 |
| Example 6 | 85 | 0.83 | APS | 0.006 | APFH | 26.4 | - | - | Ethane | 0.03 |
| Example 7 | 85 | 0.83 | APS | 0.006 | APFH | 25.9 | - | - | Ethane | 0.03 |
| Example 8 | 85 | 0.83 | APS | 0.006 | PMPA | 20.9 | - | - | Ethane | 0.03 |
| Example 9 | 85 | 0.83 | APS | 0.006 | PMPA | 13.8 | - | - | Ethane | 0.03 |
| Example 10 | 85 | 0.83 | APS | 0.006 | PMPA | 10.5 | - | - | Ethane | 0.03 |
| Example 11 | 85 | 0.30 | APS | 0.029 | APFH | 288.0 | - | - | Ethane | 0.08 |
| Example 12 | 85 | 0.30 | APS | 0.029 | APFH | 288.0 | PMVE | 0.10 | - | - |
| Exempt 13 | 85 | 020 | APS | 0.029 | APFH | 288.0 | HFP | 0.48 | - | - |
| Example 14 | 85 | 0.83 | APS | 0.006 | APFH | 55.0 | PPVE | 0.41 | - | - |
| Example 15 | 85 | 0.83 | APS | 0.006 | APFH | 55.0 | PFHE | 0.20 | Ethane | 0.03 |
| Example 16 | 70 | 0.83 | APS | 0.110 | APFH | 44.0 | CNVE | 1.12 | Ethane | 0.03 |
| Example 17 | 70 | 0.83 | APS | 0.110 | PMPA | 22.0 | CNVE | 1.12 | Ethane | 0.03 |
| Example 18 | 85 | 0.83 | APS | 0.006 | APFH | 55.0 | CTFE | 0.18 | Ethane | 0.03 |
| Example 19 | 85 | 0.83 | APS | 0.110 | APFH | 49.5 | PPVE | 8.80 | Ethane | 0.03 |
| Example 20 | 70 | 0.83 | APS | 1.100 | APFH | 44.0 | CNVE | 1.12 | Ethane | 0.03 |
| Example 21 | 70 | 0.83 | APS | 0.110 | PFPE | 33.0 | CNVE | 1.12 | Ethane | 0.03 |
| Example 22 | 85 | 0.83 | APS | 0.006 | APFP | 100.0 | - | - | Ethane | 0.03 |
| Example 23 | 85 | 0.83 | APS | 0.006 | 6,2-PFA | 7.7 | - | - | Ethane | 0.03 |

(continued)

| | Temperature | Pressure | Initiator | | Emulsifier | | Modifier | | Chain-transfer agent | |
|---|---|---|---|---|---|---|---|---|---|---|
| | | | Type | Amount | Type | Amount | Type | Amount | Type | Amount |
| | °C | MPaG | - | g | - | g | - | g | - | g |
| Example 24 | 85 | 0.83 | APS | 0.006 | 6,2-PFA | 5.0 | - | - | Ethane | 0.03 |
| Example 25 | 85 | 0.83 | APS | 0.006 | 6,2-PFAS | 3.9 | - | - | Ethane | 0.03 |
| Comparative Example 1 | 85 | 0.83 | APS | 0.006 | PMPA | 8.8 | - | - | Ethane | 0.03 |
| Comparative Example 2 | 85 | 0.83 | APS | 0.008 | APFH | 22.0 | - | - | Ethane | 0.03 |

[Table 2]

| | Volume average particle size | MFR | Modified amourt | | Melting point | Initial pyrolysis temperature | Solid content | Amount of change in velum average particle size par 1000 pom of fluoresurfectant | Dispersion stability* | |
|---|---|---|---|---|---|---|---|---|---|---|
| | | | Type | Amount | | | | | Storage stability (precipitation amount) | Machanical stability (mesh-up amount) |
| | *nm* | *g*/10 *min* | - | *mol*% | °C | °C | mass% | nm/1000 ppm | mass% | mass% |
| Example 1 | 12 | 16.7 | - | - | 3272 | 473.0 | 20.9 | 0.03 | 0.1 | 0.1 |
| Example 2 | 22 | 6.3 | - | - | 328.5 | 477.5 | 20.5 | 0.01 | 0.1 | 0.2 |
| Example 3 | 1.4 | 2.3 | - | - | 329.7 | 486.9 | 21.6 | 0.02 | 02 | 02 |
| Example 4 | 33 | 0.2 or less | - | - | 329.4 | 487.4 | 6.6 | 0.05 | 02 | 0.1 |
| Example 5 | 4.7 | 0.4 | - | - | 328.6 | 478.8 | 1.4 | 0.05 | 0.1 | 0.1 |
| Example 6 | 10.7 | 0.2 or less | - | - | 327.6 | 490.1 | 6.1 | 1.60 | 43 | 1.5 |
| Example 7 | 19.7 | 0.2 or less | - | - | 327.6 | 488.8 | 5.9 | 23.76 | 7.8 | 2.3 |
| Example 8 | 4.8 | 0.2 or less | - | - | 328.6 | 489.1 | 7.4 | 0.05 | 0.2 | 0.7 |
| Example 9 | 8.9 | 02 or less | - | - | 328.8 | 487.3 | 6.9 | 0.49 | 3.7 | 1.4 |
| Example 10 | 15.3 | 0.2 or less | - | - | 328.9 | 491.8 | 6.8 | 3.52 | 6.3 | 1.9 |
| Example 11 | 2.5 | 0.2 or less | - | - | 329.5 | 490.8 | 6.0 | 0.03 | 0.2 | 02 |
| Example 12 | 3.4 | 0.2 or less | PMVE | 0.022 | 332.8 | 496.7 | 6.6 | 0.05 | 02 | 02 |
| Example 13 | 22 | 0.2 or less | HFP | 0.133 | 331.8 | 485.3 | 3.9 | 0.03 | 02 | 02 |
| Example 14 | 1.4 | 0.2 or less | PPVE | 0.23 | 326.7 | 487.9 | 6.7 | 0.02 | 0.1 | 02 |

(continued)

| | Volume average particle size | MFR | Modified amourt | | Melting point | Initial pyrolysis temperature | Solid content | Amount of change in velum average particle size par 1000 pom of fluoresurfectant | Dispersion stability* | |
|---|---|---|---|---|---|---|---|---|---|---|
| | | | Type | Amount | | | | | Storage stability (precipitation amount) | Machanical stability (mesh-up amount) |
| | *nm* | *g/10 min* | - | *mol%* | °C | °C | mass% | nm/1000 ppm | mass% | mass% |
| Example 15 | 1.6 | 0.2 or less | PFHE | 0.144 | 329.3 | 465.5 | 6.6 | 9.03 | 0.1 | 0.2 |
| Example 16 | 1.3 | 0 | CNVE | 0.22 | 330.3 | 463.8 | 20.6 | 0.02 | 0.1 | 02 |
| Example 17 | 0.9 | 0 | CNVE | 0.62 | 329.2 | 450.4 | 20.7 | 0.01 | 0.1 | 02 |
| Example 18 | 2.8 | 02 or less | CTFE | 0.28 | 329.4 | 488.2 | 6.4 | 0.03 | 0.2 | 02 |
| Example 19 | 4.6 | 210 | PPVE | 137 | 319.8 | 434.4 | 22.7 | 0.11 | 1.8 | 0.7 |
| Example 20 | 2.6 | 0 | CNVE | 0.16 | 325.9 | 461.7 | 20.9 | 0.03 | 02 | 02 |
| Example 21 | 22 | 0 | CNVE | 0.18 | 328.7 | 488.5 | 19.8 | 0.02 | 0.2 | 02 |
| Example 22 | 2.9 | 0.2 or less | - | - | 330.8 | 476.9 | 20.5 | 0.03 | 0.3 | 0.6 |
| Example 23 | 2.7 | 0.2 or less | - | - | 3275 | 488.1 | 6.9 | 0.03 | 0.3 | 0.5 |
| Example 24 | 4.6 | 0.2 or less | - | - | 327.3 | 473.6 | 7.0 | 0.16 | 23 | 0.8 |
| Example 25 | 8.7 | 0.2 or less | - | - | 327.9 | 477.7 | 6.8 | 1.09 | 4.0 | 1.8 |
| Comperative Example 1 | 109.7 | 0.2 or less | - | - | 328.0 | 482.6 | 6.9 | 1.18 | 21.7 | 5.1 |
| comperative Example 2 | 90.2 | 0.2 or less | - | - | 327.5 | 491.6 | 7.1 | 1.47 | 18.8 | 4.6 |

*Solid content was 1.0 mass% in each of Examples 5 and 13

INDUSTRIAL APPLICABILITY

The method for producing a fluoropolymer aqueous dispersion of the present invention can provide an aqueous dispersion which contains fluoropolymer particles having a significantly small particle size and which is excellent in dispersion stability. The fluoropolymer aqueous dispersion produced by the production method of the present invention and the fluoropolymer fine powder produced from the aqueous dispersion can suitably be used as, for example, additives for a variety of molding materials, coating materials, cosmetics, wax, grease, and toners; electrode binders for secondary batteries and fuel cells; hardness adjustors for electrode binders; and water-repellents for electrode surfaces.

## Claims

**1.** A method for producing an aqueous dispersion containing at least one fluoropolymer selected from the group consisting of polytetrafluoroethylene and melt-fabricable fluororesins excluding polytetrafluoroethylene, the method comprising:

polymerizing a fluoromonomer in an aqueous medium in the presence of a fluorosurfactant and a polymerization initiator,
the fluorosurfactant having a concentration in the aqueous medium of not lower than 0.8 times the critical micelle concentration of the fluorosurfactant.

**2.** The method for producing a fluoropolymer aqueous dispersion according to claim 1,
wherein the fluorosurfactant has Log POW of 3.4 or lower.

**3.** The method for producing a fluoropolymer aqueous dispersion according to claim 1 or 2,
wherein the fluorosurfactant is at least one selected from the group consisting of:

fluorine-containing compounds represented by the following formula (1):

$$X\text{-}(CF_2)_{m1}\text{-}Y \qquad (1)$$

wherein X is H or F; m1 is an integer of 3 to 5; and Y is - $SO_3M$, $-SO_4M$, $-SO_3R$, $-SO_4R$, -COOM, $-PO_3M_2$, or $-PO_4M_2$, where M is H, $NH_4$, or an alkali metal and R is a C1-C12 alkyl group; and
fluorine-containing compounds represented by the following formula (3):

$$CF_3OCF(CF_3)CF_2OCF(CF_3)COOX \qquad (3)$$

wherein X is a hydrogen atom, $NH_4$, or an alkali metal atom.

**4.** The method for producing a fluoropolymer aqueous dispersion according to claim 1, 2, or 3,
wherein the polymerization is performed in the absence of a fluorine-containing compound represented by the following formula (2):

$$X\text{-}(CF_2)_{m2}\text{-}Y \qquad (2)$$

wherein X is H or F; m2 is an integer of 6 or greater; and Y is $-SO_3M$, $-SO_4M$, $-SO_3R$, $-SO_4R$, -COOM, $-PO_3M_2$, or $-PO_4M_2$, where M is H, $NH_4$, or an alkali metal and R is a C1-C12 alkyl group.

**5.** The method for producing a fluoropolymer aqueous dispersion according to claim 1, 2, 3, or 4,
wherein the fluoropolymer has a volume average particle size of not smaller than 0.1 nm but smaller than 20 nm.

**6.** The method for producing a fluoropolymer aqueous dispersion according to claim 1, 2, 3, 4, or 5,
wherein the polymerization initiator is at least one selected from the group consisting of persulfates and organic peroxides.

**7.** The method for producing a fluoropolymer aqueous dispersion according to claim 1, 2, 3, 4, 5, or 6,
wherein the polymerization initiator is used in an amount corresponding to 1 to 5,000 ppm of the aqueous medium.

## INTERNATIONAL SEARCH REPORT

International application No.
PCT/JP2015/066211

A. CLASSIFICATION OF SUBJECT MATTER
*C08F2/24*(2006.01)i, *C08F14/00*(2006.01)i

According to International Patent Classification (IPC) or to both national classification and IPC

B. FIELDS SEARCHED

Minimum documentation searched (classification system followed by classification symbols)
C08F2/24, C08F14/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 10-513497 A (E.I. Du Pont de Nemours & Co.), 22 December 1998 (22.12.1998), claims; page 12, line 11 to page 14, line 23; page 15, line 28 to page 16, line 24; examples & US 5543217 A & WO 1996/024625 A2 & EP 808336 A2 & CN 1173883 A | 1,2,4-7<br>3 |
| Y | JP 2009-155558 A (Daikin Industries, Ltd.), 16 July 2009 (16.07.2009), claims; paragraph [0100] (Family: none) | 3 |
| Y | WO 2005/042593 A1 (Daikin Industries, Ltd.), 12 May 2005 (12.05.2005), claims; paragraph [0094] & US 2007/0135558 A1 & WO 2005/042593 A1 & EP 1688441 A1 & CN 1875035 A | 3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 June 2015 (19.06.15) | 30 June 2015 (30.06.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/066211

C (Continuation). DOCUMENTS CONSIDERED TO BE RELEVANT

| Category* | Citation of document, with indication, where appropriate, of the relevant passages | Relevant to claim No. |
|---|---|---|
| P,X | WO 2014/084399 A1 (Daikin Industries, Ltd.), 05 June 2014 (05.06.2014), claims; examples (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007046345 A
- JP 2010180364 A
- JP 2012513530 T
- US 20070015864 A
- US 20070015865 A
- US 20070015866 A
- US 20070276103 A
- US 20070117914 A
- US 2007142541 A
- US 20080015319 A
- US 3250808 A
- US 3271341 A
- JP 2003119204 A
- WO 2005042593 A
- WO 2008060461 A
- WO 2007046377 A
- WO 2007119526 A
- WO 2007046482 A


### Non-patent literature cited in the description


- *Environmental Science & Technology,* 2011, vol. 45 (19), 8120-8128